# EUROPEAN PATENT APPLICATION

(11) **EP 4 513 691 A2**
(43) Date of publication of application: **26.02.2025**
(21) Application number: 24215582.8
(22) Date of filing: 24.02.2023
(51) Int. Cl.: H02B 13/055

(54) **GAS INSULATED ELECTRIC APPARATUS**

(62) Divisional of application: 23707711.0
(71) Applicant: Hitachi Energy Ltd, 8050 Zürich (CH)
(72) Inventor: Ehrler, Isabell, 8045 Zurich (CH); Boehm, Moritz, 5507 Mellingen (CH); Donzel, Lise, 5430 Wettingen (CH); Gatzsche, Michael, 8003 Zürich (CH); Hengstler, Johannes, 8426 Lufingen (CH); Frei, Peter, 8803 Rüschlikon (CH); Teppati, Valeria, 8112 Otelfingen (CH); Wegmann, Jonas, 8472 Seuzach (CH); Kaufmann, Benjamin, 8052 Zürich (CH)
(74) Representative: Michalski Hüttermann & Partner Patentanwälte mbB

(57) **Abstract**

The invention relates to a gas insulated electric apparatus (1) comprising an insulating tube (2), an electric high voltage appliance (3) arranged inside the insulating tube (2) and a permeation barrier (5) arranged within the insulating tube (2) and circumferentially surrounding the electric high voltage appliance (3), whereby the insulating tube (2) contains an insulation gas (4) comprising at least 70 % by volume of CO₂ and/or N₂ and comprising an elevated and pre-determined operating gas pressure level, and the permeation barrier (5) comprises polyvinyl alcohol, ethylene vinyl alcohol, aluminium oxide and/or polyurethane.

## Description

### Technical Field

The invention relates to a gas insulated electric apparatus comprising an insulating tube, an electric high voltage appliance arranged inside the insulating tube and a permeation barrier, whereby the insulating tube contains an insulation gas comprising at least 70 % by volume of CO₂ and/or N₂ and comprising an elevated and pre-determined operating gas pressure level. The invention further relates to a method for manufacturing a gas insulated electric apparatus comprising an electric high voltage appliance, comprising the step of: Manufacturing an insulating tube.

### Background Art

In gas insulated electric apparatuses such as medium and high voltage switchgears or control gears an electrical active part is arranged in a gas-tight insulating tube or housing. The insulating tube or housing defines an insulating space that is arranged to contain an insulation gas at an elevated pressure, which can be several bars. The insulating space separates the insulating tube from the electrical active part without letting electrical current pass through.

The insulation gas serves as an electric insulation medium and prevents electric discharge between the insulating tube and the electrical components inside the insulating tube. Further, the insulation gas serves as a cooling medium for suppressing temperature rise due to electric current. In a switchgear which typically comprises a circuit breaker and/or a disconnector, the insulation gas also serves as an arc-extinguishing medium for extinguishing arcs that may occur at the switching operation. Conventionally, sulphur hexafluoride gas, SF₆ or SF₆ gas, has been widely used as insulation gas. However, in view of the known environmental drawbacks of SF₆, the use of other insulation gases has been proposed, such as carbon dioxide, CO₂, Nitrogen, N₂, mixtures thereof or other gases.

Generally, the insulating tube of the gas insulated electrical apparatuses is filled with the insulation gas up to a pre-determined operational rated gas pressure level before it is taken into operation. The pre-determined pressure level can be chosen depending on the insulation gas, switched current/voltage and/or the switching capacity of the electric apparatus. The pressure level is measured during the operation continuously or at pre-determined intervals.

If the gas pressure level is below a pre-defined lowest acceptable pressure level, also called alarm level, an alarm is generated to the operator. If the alarm is generated, the insulating tube should be filled with insulation gas to the pre-determined operational gas pressure level. If the insulating tube is not replenished, there is a risk that the insulation gas pressure will continue to decrease and consequently operational disturbances are caused.

Normally, the electrical apparatus has a pre-defined blocking pressure level, also named lock-out gas pressure level, and when the blocking pressure level is reached, the function of the gas insulated electric apparatus will be blocked and ceased. When the gas insulated electrical apparatus is a switchgear, it is usually configured to react in one of two ways: either the function of the gas insulated electric apparatus will be blocked such that it will not be possible to open or close an electric contact of the switchgear, or the electric contact will be forced open and stay open.

EP 3 416 178 A1 describes a gas insulated electric apparatus comprising an enclosure and an electric high voltage appliance located inside the enclosure.

US 10 818 407 B2 describes an electrical apparatus having an insulating space which contains a dielectric insulation fluid comprising an organofluorine compound.

EP 4 142 079 A1 describes a gas insulated electric apparatus comprising an enclosure, an electric high voltage appliance arranged inside the enclosure and a permeation barrier arranged within the enclosure and circumferentially surrounding the electric high voltage appliance.

The refilling operation and monitoring of the alarms in the electrical apparatuses are time and labour consuming tasks. Therefore, there is a need to reduce service occasions while operational disturbances of gas insulated electrical apparatuses are effectively avoided.

### Summary of invention

It is therefore an object of the invention to maintain properties of an insulation material of the insulating tube as best as possible for avoiding CO₂ and/or N₂ leakage.

The object of the invention is solved by the features of the independent claims. Preferred implementations are detailed in the dependent claims.

Thus, the object is solved by a gas insulated electric apparatus comprising an insulating tube, an electric high voltage appliance arranged inside and/or outside of the insulating tube, whereby
the insulating tube comprises a permeation barrier,
the insulating tube contains and/or is surrounded by an insulation gas comprising at least 70 % by volume of CO₂ and/or N₂ and comprising an elevated and pre-determined operating gas pressure level,
the permeation barrier comprises polyvinyl alcohol, ethylene vinyl alcohol, aluminium oxide, silicon oxide and/or polyurethane.

In order to lower the global warming potential, GWP, alternative isolation gas mixtures are used other than SF₆, which contain molecules such as CO₂ and/or N₂ having a lower kinetic diameter and/or a higher solubility in the respective material of an insulating tube consisting in particular of epoxy based composite as insulator. Tests have demonstrated that CO₂ and/or N₂ alternative isolation gas mixtures permeate at high rates through such epoxy based insulating tube, which leads to a significant pressure drop and finally results in reduced dielectric and or current switching behaviour of the gas insulated electric apparatus respectively the in particular epoxy based composite manufactured insulating tube. In addition, H₂O can permeate into the insulation space defined by the insulating tube and can lead directly or indirectly to decomposition of the insulation gas, to corrosion of components inside the gas insulated electric apparatus such as the electric high voltage appliance or to lower dielectric withstand of the insulating tube.

Prior art insulating tubes typically comprise and/or the insulating tube comprises a material having a CO₂ permeation coefficient at 20 °C of more than 1.0 cm³ * mm / (m² * day * bar) and/or a CO₂ solubility at 20 °C of at least 1.0 * 10⁻⁵ kmol / (m³ * kPa). Such material leads to significant CO₂ and/or N₂ pressure drop. By applying the proposed permeation barrier, the CO₂ and/or N₂ pressure drop is significantly reduced, in particular by at least 20, 50 or 80%. The term contains and/or is surrounded by the insulation gas means in particular that the insulating tube comprises the insulation gas arranged within the insulating tube and/or that the insulation gas is arranged outside the insulating tube, whereby, for example, the insulation gas is housed by an outer insulating tube housing the insulating tube as well. Preferably no insulation gas is present within the insulating tube.

In sum, the proposes gas insulated electric apparatus consists of the insulating tube with the permeation barrier as layer of a particular thickness and material to decrease gas permeation through the insulating tube to a certain degree and therefore reduces a risk of accumulation of gas, in one implementation, inside the insulating tube, reduction of gas partial pressure outside of the insulating tube, partial discharge and destruction of the insulating tube itself due to pressure increase as a result of continuous permeation. Thereby, the permeation barrier can be applying, for example during a winding process of the insulating tube, as a first winding layer, as an intermediate layer and/or as a last winding layer.

According to a preferred implementation, the permeation barrier is arranged within a wall, on an inside wall and/or an outside wall of the insulating tube. Preferably the permeation barrier covers at least 50%, 75%, 90% or the complete inside and/or outside wall of the insulating tube. Further preferably, the permeation barrier is arranged circumferentially surrounding and/or the permeation barrier circumferentially surrounds the electric high voltage appliance.

In a further preferred implementation the permeation barrier comprises a permeation layer surrounded on at least one side by a flow promoter layer, a surface activation and/or primer layer, a carrier layer and/or a protective layer. The flow promoter layer, the surface activation and/or primer layer, and/or the protective layer can be arranged on an inside and/or on an outside of the permeation barrier and/or the permeation layer. The protective layer can be provided as solvent based epoxy layer, among others. The protective layer can be intended to prevent water absorption of the permeation layer and/or prevent chemical reaction of the insulation gas with the permeation layer. The carrier layer may comprise polymide, PI, polyethylene terephthalate, PET, (oriented)polypropylene, (O)PP, polyethylene naphthalate, PEN, or other suitable materials.

Thus, a key point of the invention is therefore to provide a layer of in particular a low permeation material, LPM, having a very low permeation coefficient for the respective gas i.e. CO₂ and/or N₂ as permeation barrier. For allowing a simple implementation by using for example wide band strips or sheets as permeation barrier, the described solution proposes to provide on at least one side of the permeation layer the flow promoter layer and/or the surface activation and/or primer layer. Such way air bubbles and/or cracks leading to potential failure of the epoxy based composite insulator respectively insulating tube under dielectric or environmental stress can be effectively avoided, while a simple manufacturing of the permeation barrier and thus cost-effective manufacturing of the gas insulated electric apparatus becomes available. In addition, the proposed solution avoids permeation through the epoxy based composite insulator respectively insulating tube, which avoids a pressure drop within the insulating tube resulting in stable and reliable dielectric and or current switching behaviour.

The insulating tube, sometimes also referred to as enclosure, preferably comprises a tube-like or conical tube-like shape and/or is preferably hermetically sealed. Thus, the insulation gas preferably completely surrounds the electric high voltage appliance. The permeation barrier arranged within the insulating tube means in particular that the permeation barrier is encapsulated within the insulating tube, thus for example not visible from an outside or inside of the insulating tube. The insulating tube can be filled with CO₂ and/or N₂ as insulation gas by at least 70 % by volume, but may also be completely filled with CO₂ and/or N₂. The remainder up to 100 % by volume in the insulation gas may comprise for example oxygen O₂ or another gas to an extent of less than 30 % by volume. Preferably, the operating gas pressure level is from 0.7 or 1.0 MPa up to 1.2 MPa or 1.4.

In one implementation, the insulating gas comprises 2 to 15, in particular 3 to 5, volume % of C4-fluoronitrile and 2 to 15, in particular 4 to 11, volume % of O₂, and further comprises CO₂ as carrier gas. More specifically, CO₂ can be present in an amount of at least 70 volume %. The term C4-fluoronitrile preferably refers to heptafluoroisobutyronitrile. The insulating gas may comprise, in addition to CO₂, for example an organofluorine compound, for example a fluoronitrile, and in particular a perfluoronitrile, a C4-fluoronitrile and/or a heptafluoroisobutyronitrile. More particularly, the fluoronitrile can be a perfluoroalkylnitrile, specifically perfluoroacetonitrile, perfluoropropionitrile (C₂F₅CN) and/or perfluorobutyronitrile (C₃F₇CN). Preferably, the fluoronitrile can be perfluoroisobutyronitrile (according to the formula (CF₃)₂CFCN) and/or perfluoro-2- methoxypropanenitrile (according to the formula CF₃CF(OCF₃)CN). Of these, perfluoroisobutyronitrile is particularly preferred due to its low toxicity.

The permeation barrier preferably extends across the complete lateral inner and/or outer surface of the insulating tube. Further, the permeation layer is preferably surrounded on its complete or at least on it partial surface with the flow promoter layer and/or the surface activation and/or primer layer. Thereby, the flow promoter layer and/or the surface activation and/or primer layer can be provided on one side of the permeation layer or on both sides of the permeation layer. The insulating tube can be sealed with one or more sealings, for example made of a polymeric material of various types, for example nitrile rubber, NBR, ethylene propylene diene monomer rubber, EPDM, and/or isobutylene isoprene rubber, (X)IIR, rubber, but not limited to these materials.

As described, the permeation barrier and/or preferably the permeation layer comprises polyvinyl alcohol, PVOH, and/or ethylene vinyl alcohol, EVOH, aluminium oxide, in particular aluminium oxide foil, silicon oxide and/or polyurethane. PVOH and/or EVOH provides an CO₂ and/or N₂ but also an oxygen or hydrocarbon barrier. PVOH and/or EVOH is advantageous in that it is highly transparent, weather resistant, oil and solvent resistant, flexible, moldable, recyclable, and printable. PVOH and/or EVOH can be applied by coextruding or laminating. The permeation barrier and/or permeation layer may comprise a thickness of 0,0001, 0,0005, 0,001, 0,01, 0,1, 0,5, 1, 2, 5 or 10 mm. Aluminium oxide or aluminium oxide foil may have a thickness of 0,016 or 0,024 mm. Besides that other materials can be used for mitigating permeation of the insulation gas. The surface activation layer may result from plasma and/or chemical threating and/or chemical bonding the permeation layer. As primer any suitable material may be used for priming the insulating tube and the permeation layer.

Polyvinyl alcohol, PVOH, PVA, or PVAI, can be understood as a water-soluble synthetic polymer and/or having the chemical formula (C₂H₄O)ₓ. Ethylene vinyl alcohol can be understood as a formal copolymer of ethylene and vinyl alcohol and/or having the chemical formula (C₂H₄O-C₂H₄)ₓ. Aluminium oxide, or aluminium(III) oxide, can be understood as a chemical compound of aluminium and oxygen with the chemical formula Al₂O₃. Polyurethane, often abbreviated as PUR and PU, can be understood as a class of polymers composed of organic units joined by carbamate (urethane) links. PVOH, PU and/or EVOH are preferably applied by spraying. SiOₓ compound and/or aluminium oxide are preferably applied by chemical vapor deposition, in particular by plasma impulse. PVOH, PU and/or EVOH can be integrated with or without the surface activation and/or primer layer. Silicone oxide, in particular a SiOₓ compound, and/or aluminium oxide can be integrated with the surface activation and/or primer layer, but preferably not without the carrier layer and/or the surface activation and/or primer layer.

In a further preferred limitation the permeation barrier, the permeation layer, the flow promoter layer and/or the surface activation and/or primer layer are provided as a sheet and/or as a strip, preferably as preferably overlapping wrapped strips, preferably overlapping in axial and/or circumferential direction. The strips can be provided as wide band strips. Preferably, the sheets and/or the strips overlap across the complete axial and/or circumferential extension of the respective layer. In circumferential extension the sheet and/or the strip may comprise no gap, a gap or may overlap. Alternatively, the permeation barrier, the permeation layer, the flow promoter layer and/or the surface activation and/or primer layer can be applied by spraying, in particular on an inner and/or outer surface respectively wall.

In another referred implementation the gas insulated electric apparatus comprises the flow promoter layer, whereby the flow promoter layer comprises a fleece and/or mesh. The fleece and/or mesh may comprise polyester, aramid, a synthetic fibre, a textile fibre and/or any mixture thereof. Further materials may comprise polyamide such as nylon, Kevlar, Nomex, trogamide, and combinations of polyester, polyamide, and polypropylene. The flow promoter layer may comprise a thickness of 0,1, 0,3, 0,5, 1 or 2mm.

In a further preferred implementation the permeation barrier is arranged within the insulating tube adjacent to an inside of the insulating tube and/or closer to the inside than to the outside of the insulating tube. Having the permeation barrier close to the inside bears the advantage that only very few radial material exists within the insulating tube for saturating the insulating gas therein. Thus, the permeation barrier is preferably arranged as close as possible to the inside of the insulating tube.

It is further preferred that the electric high voltage appliance is arranged inside the insulating tube and that the insulating tube circumferentially surrounds the electric high voltage appliance. Alternatively, the gas insulated electric apparatus may comprises an outer insulating tube, whereby the electric high voltage appliance is arranged outside the insulating tube and inside the outer insulating tube. The outer insulating tube may comprise a tube like shape. A space between the insulating tube and the outer insulating tube may be filled with the insulating gas, such as for example CO₂ and/or N₂ mixed with C4-FN and O₂. The insulating tube may be filled with an insulating fluid, such for example oil or gas, or may comprise a vacuum with an electrical sub-component. The outer insulating tube may also comprise a permeation barrier and/or another layer as described in the application.

According to a further preferred implementation the gas insulated electric apparatus comprises a plurality of permeation barriers arranged in particular distant to each other on and/or within the insulating tube. Having a plurality of permeation barriers and/or a permeation barrier with higher thickness results in lower permeation. Thus, a limit-thickness of the a permeation barrier and/or number of permeation barriers may be necessary to ensure a specific leakage rate is not exceeded such that a specified lifetime before a refill with insulating gas is required can be ensured.

In another preferred implementation the permeation barrier comprises polyvinyl alcohol and/or ethylene vinyl alcohol and a thickness ≥ 5 and ≤ 450 µm, in particular ≥ 10 and ≤ 300 µm, in particular ≥ 50 and ≤ 200 µm. In a further preferred implementation the permeation barrier comprises polyurethane and a thickness ≥ 10 and ≤ 500 µm, in particular ≥ 50 and ≤ 300 µm. In another preferred implementation the permeation barrier comprises polyvinyl alcohol, ethylene vinyl alcohol and/or polyurethane and is covered by a solvent based epoxy paint layer, in particular a solvent based epoxy layer, having a dry film thickness ≥ 50 and ≤ 150 µm, in particular ≥ 75 and ≤ 125 µm.

In another preferred implementation the electric high voltage appliance is provided as a high voltage interrupter. The electric apparatus can be provided as a gas insulated live tank circuit breaker, as a gas insulated dead tank circuit breaker, as a bushing or as a gas insulated switchgear. Alternatively, the electric apparatus can be provided as a control gear such as a gas insulated instrument transformer. In either one of these apparatuses it will be of great value to have an apparatus that will have a reliable functionality for many years without requiring refilling of insulation gas.

In a further preferred implementation the electric apparatus is provided as an outdoor gas insulated electric apparatus. In this respect the insulating tube can be covered with silicone sheds. Alternatively, in case the insulating tube is provided as epoxy based composite insulator, layer of the insulator can be imbedded within the silicone sheds following the same principles described.

The object is further solved by a method for manufacturing a gas insulated electric apparatus comprising an electric high voltage appliance, comprising the steps of:
Manufacturing an insulating tube in particular for arranging the electric high voltage appliance therein, and
Applying, during manufacturing, a permeation barrier to the insulating tube for in particular circumferentially surrounding the electric high voltage appliance, whereby
the permeation barrier comprises polyvinyl alcohol, ethylene vinyl alcohol, aluminium oxide, silicon oxide and/or polyurethane.

The insulating tube is preferably manufactured by impregnation of a liquid epoxy on a core having a negative form of an inner surface of the insulating tube. The liquid epoxy flows and should fill all cavities. The proposed flow promoter layer and/or surface activation and/or primer layer helps to avoid that air bubbles remain and/or cracks arise, which otherwise may lead to potential failure of the epoxy based composite insulator respectively insulating tube under dielectric or environmental stress.

According to a preferred implementation the insulating tube comprises an epoxy based composite isolator, the epoxy based composite isolator comprises wet wound fibres and/or the manufacturing comprises vacuum impregnating the epoxy based composite isolator.

In another preferred implementation the method comprises the step of:
Applying, during manufacturing, first a flow promoter layer and/or a surface activation and/or a primer layer, second the permeation barrier and/or a permeation layer, and/or third another promoter layer and/or another surface activation and/or primer layer.

In a further preferred implementation the method comprises the step of:
Applying, during manufacturing, first the permeation barrier and/or the permeation layer and second a protective layer.

In another preferred implementation the method comprises the step of:
Applying, during manufacturing, first the permeation barrier and/or the permeation layer onto a carrier layer.

In a further preferred implementation the method comprises the steps of:

Filling the insulating tube with an insulation gas comprising at least 70 % by volume of CO₂ and/or N₂ and comprising an elevated and pre-determined operating gas pressure level, and
hermetically sealing the insulating tube.

Further implementations and advantages of the method are directly and unambiguously derived by the person skilled in the art from the apparatus as described before.

### Brief description of drawings

These and other aspects of the invention will be apparent from and elucidated with reference to the implementations described hereinafter.

In the drawings:
Fig. 1a shows a gas insulated electric apparatus with an enlarged part of an insulating tube of the apparatus in a schematic top view according to an exemplary implementation,
Fig. 1b shows an enlarged part of the insulating tube of the apparatus in a schematic top view according to a further exemplary implementation,
Fig. 2 shows an enlarged parts of insulating tubes of the apparatus in a schematic top view according to further exemplary implementations,
Fig. 3 shows the gas insulated electric apparatus in a schematic side view according to the exemplary implementations,
Fig. 4a to 4f each show an enlarged part of the insulating tube of the apparatus in a schematic top view according to further exemplary implementations,
Fig. 5 shows the insulating tube of the gas insulated electric apparatus in a schematic side view according to a further exemplary implementation, and
Fig. 6 shows the insulating tube of the gas insulated electric apparatus in a schematic top view according to a further exemplary implementation.

### Description of implementations

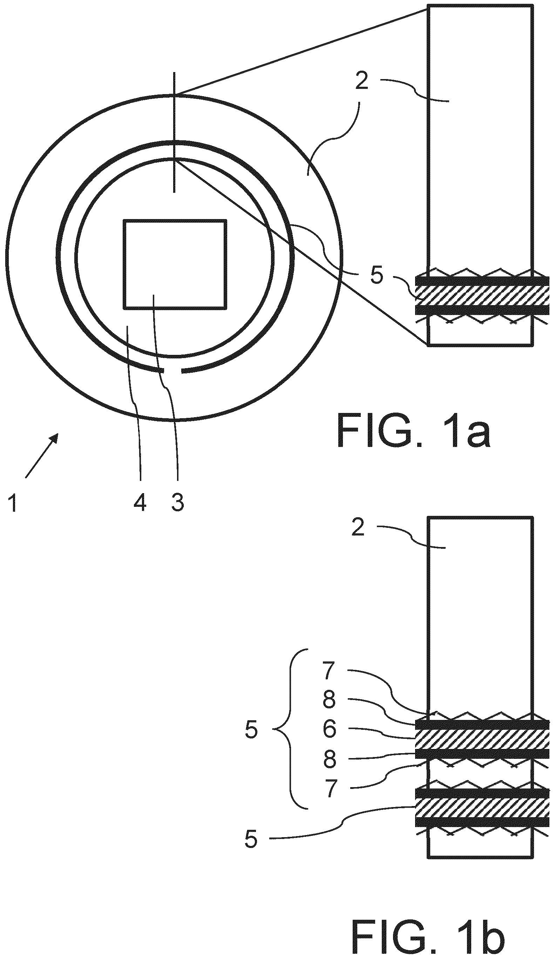

Fig. 1 shows a gas insulated electric apparatus 1 according to an exemplary implementation in a schematic top view. The gas insulated electric apparatus can be provided a gas insulated circuit breaker, finding its application for example as a gas insulated live tank circuit breaker, a bushing or a gas insulated dead tank circuit breaker. Alternatively, the gas insulated electric apparatus may be a gas insulated switchgear, or a control gear such as a gas insulated instrument transformer. The gas insulated apparatus can be suitable for use outdoors.

The gas insulated electric apparatus 1 generally comprises an electrically insulating insulating tube 2 having a shape of a tube shown in top view with a wall made of a polymeric material and/or a composite material, in particular an epoxy based composite material as insulator capable to resist a pressure inside the insulating tube 1. The insulating tube 2 is typically manufacturing by wet-wound fibers and/or in a vacuum impregnation process, thus resulting in a high mechanical strength and good dielectric properties of the insulator. Inside the insulating tube 2 arranged is an electric high voltage appliance 3, which is provided as a high voltage interrupter and is only schematically shown in Fig. 1. The insulating tube 2 is hermetically sealed and filled with an insulation gas 4, which comprises at least 70 % by volume of CO₂ and/or N₂ at an elevated and pre-determined operating gas pressure level ranging from 0.7 or 1.0 MPa up to 1.2 or 1.4 MPa.

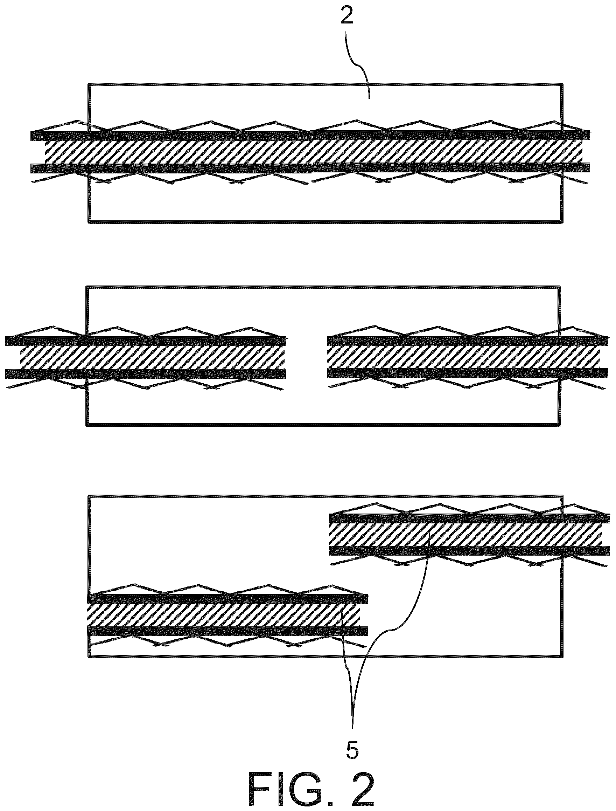

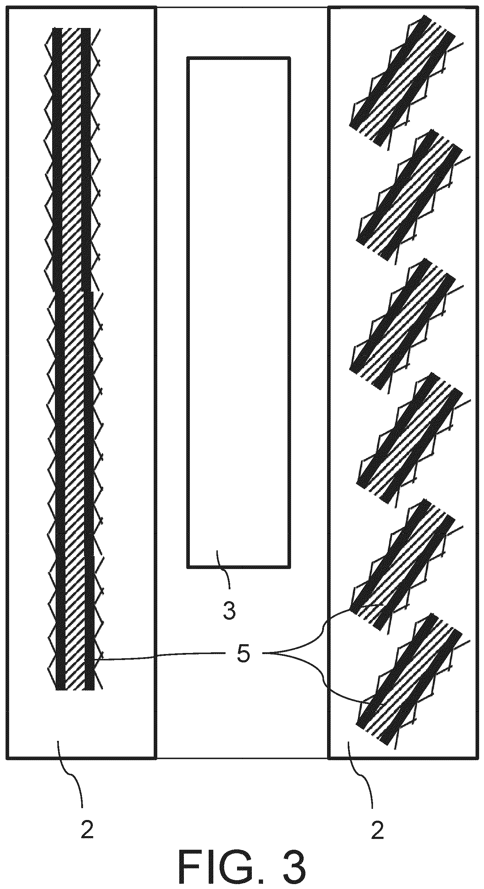

On the insulating tube, for example on an inside and/or outside wall of the insulating tube, a permeation barrier 5 is provided, which circumferentially surrounds the electric high voltage appliance 3. The permeation barrier 5 comprises polyvinyl alcohol, ethylene vinyl alcohol, aluminium oxide, silicone oxide and/or polyurethane, Circumferentially, as shown in Fig. 2 in the top, the permeation barrier 5 can have no circumferential gap, can have a circumferential gap, as shown in Fig. 2 in the middle, or can be arranged circumferentially overlapping, as shown in Fig. 2 on the bottom. Without gap, the permeation barrier 5 fully respectively completely extends around the electric high voltage appliance 3. The gap might be 1, 2, 5 or 10 mm wide. In axial direction, depicted in Fig. 3, the permeation barrier 5 may also cover the complete axial extension of the insulating tube 2, as shown on the left side of Fig. 3. Alternatively, as shown on the right side of Fig. 3, permeation barrier 5 can be arranged in an overlapping manner. Overlapping means that in radial direction the electric high voltage appliance 3 is always surrounded by any of the various permeation barriers 5.

Generally, the permeation barrier 5 may be provided as a sheet and/or as a strip, for example as said overlapping wrapped strips. Also, as depicted in Fig. 1b, multiple layers of individual permeation barriers 5 can be present within the insulating tube 2 arranged distant to each other. Thereby, as shown in Fig. 1, the permeation barrier 5 is arranged inside the insulating tube 2 adjacent to an inside respectively inner surface of the insulating tube 2. In other words, the permeation barrier 5 is preferably provided closer to the inside than to the outside of the insulating tube 2. The outside respectively outer surface of the insulating tube 2, i.e. the surface facing the surroundings of the insulating tube 2, can comprise a plurality of sheds, not shown. The sheds may extend along the whole or partial length of the insulating tube.

When manufacturing the insulating tube 2, epoxy composites may be placed around a core representing a negative form of the inner surface of the designated insulating tube 2, followed by placing the permeation barrier 5 onto the epoxy composites and again followed by another layer of epoxy composites up to the designated outer surface of the designated insulating tube 2. When the insulating tube 2 is cured, the core can be removed and the electric high voltage appliance 3 can be placed within the insulating tube 2. The insulating tube 2 is sealed and filled with the insulation gas 4 up to the operating gas pressure level.

Referring again to Fig. 1, permeation barrier 5 comprises a thin layer of a Low Permeation Material, LPM, having a very low permeation coefficient for the respective insulation gas 4 as permeation layer 6. Said permeation layer 6 can be applied once to form a single layer or multiple times to increase effectiveness if very low permeation rates are required. As explained before, in simplest implementation the permeation layer 6 can be formed of a sheet of LPM being wrapped once around the insulating tube 2 during manufacturing the same. For practical reasons, the permeation layer 6 can be made of wide band strips instead of a single sheet of LPM. These strips are wrapped with or without overlap depending on the permeation performance needed. The permeation layer 6 consists of polyvinyl alcohol and/or ethylene vinyl alcohol, PVOH and/or EVOH, and/or can be provided as aluminium oxide or silicon oxide applied on a foil, or other materials suitable for avoiding permeation of the insulating gas 4.

In order to achieve a sufficient impregnation and/or adhesion with such sheets or wide strips in composite materials such as epoxy based composite insulating tubes, potentially resulting in air bubbles or cracks leading to failure of the insulation insulating tube 2 under dielectric or environmental stress, impregnation is improved by providing an flow promoter layer 7, while adhesion is improved by providing a surface activation and/or primer layer 8. Thus, either both the flow promoter layer 7 and the surface activation and/or primer layer 8 can be present, while also only one of the flow promoter layer 7 and the surface activation and/or primer layer 8 may be present. Also, only one side of both sides of the permeation layer 6 can be equipped with the flow promoter layer 7 and/or the surface activation and/or primer layer 8.

The flow promoter layer 7 comprises fleece and/or mesh, such as for example polyester, aramid, textiles, or any combination of mixture thereof. The thickness of the promoter layer 7 may range between 0,3 to 2mm, preferably 1mm. The surface activation and/or primer layer 8 can be applied by plasma threating, chemical bonding and/or chemical threating the permeation layer 6 for activating the surface of the permeation layer 6. The thickness of the surface activation and/or primer layer 8 may range from a 0,5 mm to 1 mm, for example 1 µm. The permeation layer 6 may comprise a thickness of 0,0001, 0,0005, 0,001, 0,01, 0,1, 0,5, 1, 2, 5 or 10 mm.

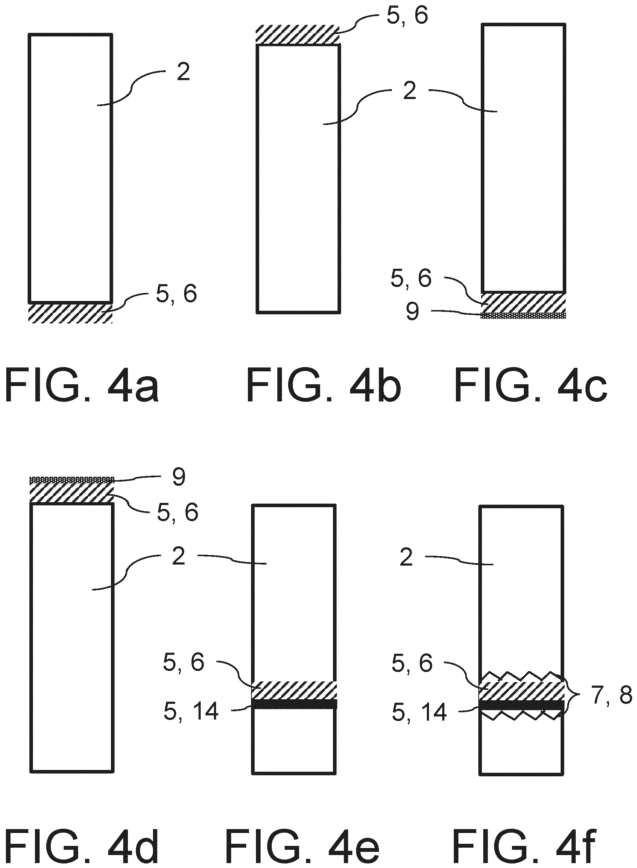

Fig. 4a to 4e each show an enlarged part of the insulating tube 2 of the apparatus 1 in a schematic top view according to further exemplary implementations. Fig. 4a shows an implementation where the permeation barrier 5 respectively the permeation layer 6 is provided on an inner surface wall of the insulating tube 2, while Fig. 4b shows an implementation where the permeation barrier 5 respectively the permeation layer 6 is provided on an outer surface wall of the insulating tube 2.

Fig. 4c shows an implementation where the permeation barrier 5 respectively the permeation layer 6 is again provided on the inner surface wall of the insulating tube 2, whereby the permeation barrier 5 respectively the permeation layer 6 is circumferentially and completely covered by a protective layer 9. Such way the permeation barrier 5 respectively the permeation layer 6 is radially arranged between the insulating tube 2 and the protective layer 9. Said protective layer 9 is provided as a solvent based epoxy layer. In an analogous manner, Fig. 4d shows an implementation where the permeation barrier 5 respectively the permeation layer 6 is provided on the outer surface wall of the insulating tube 2, whereby the permeation barrier 5 respectively the permeation layer 6 is circumferentially and completely covered by the protective layer 9.

Fig. 4e shows an implementation where the permeation barrier 5 respectively the permeation layer 6 is arranged radially inside the insulating tube 2, while on an inside circumferentially covered by a carrier layer 14, which is provided as foil. Such carrier layer 14 is in particular advantageous for a permeation barrier 5 comprising aluminium oxide and silicon oxide. Fig. 4f again shows an implementation where the permeation barrier 5 respectively the permeation layer 6 is arranged radially inside the insulating tube 2 and covered with the carrier layer 14 towards the inside. Besides the combination of permeation barrier 5 respectively permeation layer 6 and carrier layer 14 is on both sides covered with a promoter layer 7 and/or surface activation and/or primer layer 8.

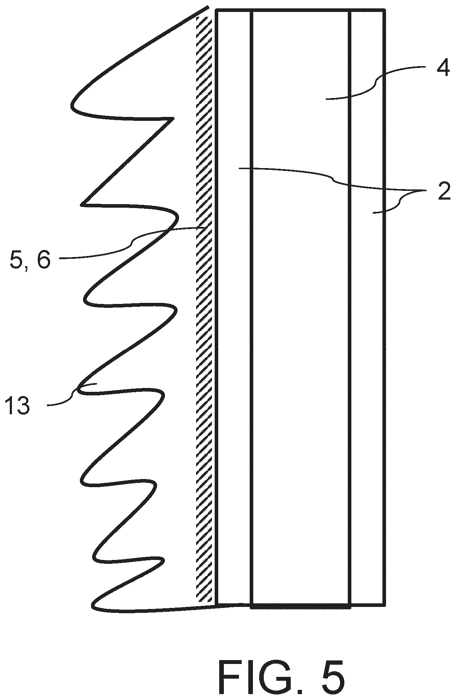

Fig. 5 shows the insulating tube 2 of the gas insulated electric apparatus 1 in a schematic side view according to a further exemplary implementation. The permeation barrier 5 respectively the permeation layer 6 is arranged on the outer wall of the insulating tube 2. The permeation barrier 5 respectively the permeation layer 6 is covered by silicon sheds as epoxy based composite isolator 13, in particular for outdoor application for protecting the insulating tube 2 tube and for providing greater creeping distances.

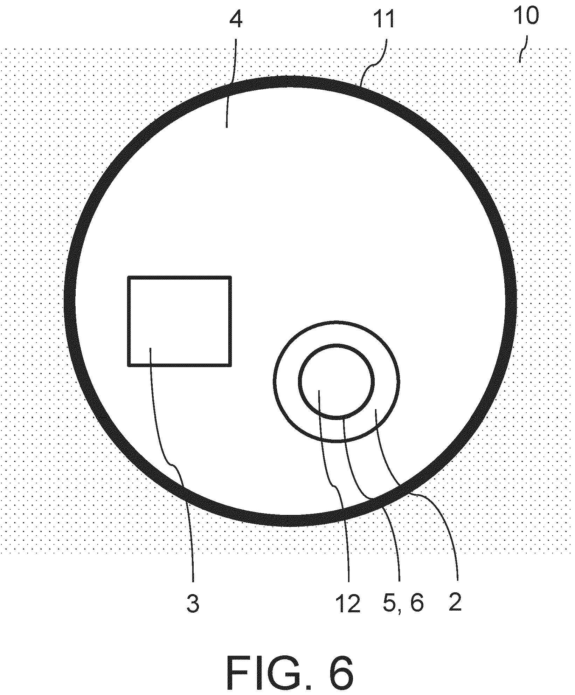

Fig. 6 shows the insulating tube 2 of the gas insulated electric apparatus 1 in a schematic top view according to a further exemplary implementation. The permeation barrier 5 respectively the permeation layer 6 is arranged on the inner wall of the insulating tube 2, whereby the insulating tube 2 is filled with an insulating fluid 12 such as for example oil. Alternatively, a vacuum is provided within the insulating tube 2 housing an electrical sub-component.

The insulating tube 2 is provided within an outer insulating tube 11, which also comprise a tube-like shape. Such wise the outer insulating tube 11 completely surrounding the insulating tube 2. A space between the outer insulating tube 11 and the insulating tube 2 is filled with the insulation gas 4. Further, the electric high voltage appliance 3 is provided between the outer insulating tube 11 and the insulating tube 2 i.e. in the space. The outer insulating tube 11 is surrounded by ambient atmosphere 10, such as for example air. The outer insulating tube 11 may also comprise a permeation barrier 5 respectively the permeation layer 6, or other respective layers as mentioned above.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: electric apparatus
- 2: insulating tube
- 3: electric high voltage appliance
- 4: insulation gas
- 5: permeation barrier
- 6: permeation layer
- 7: promoter layer
- 8: surface activation and/or primer layer
- 9: protective layer
- 10: atmosphere
- 11: outer insulating tube
- 12: insulating fluid
- 13: epoxy based composite isolator
- 14: carrier layer

## Claims

1. A gas insulated electric apparatus (1) comprising an insulating tube (2), an electric high voltage appliance (3) arranged outside of the insulating tube (2), whereby
the insulating tube (2) comprises a permeation barrier (5),
the insulating tube (2) is surrounded by an insulation gas (4) comprising at least 70 % by volume of CO₂ and/or N₂ and comprising an elevated and pre-determined operating gas pressure level, and
the permeation barrier (5) comprises polyvinyl alcohol, ethylene vinyl alcohol, aluminium oxide, silicon oxide and/or polyurethane.

2. The gas insulated electric apparatus (1) of the previous claim, whereby the permeation barrier (5) is arranged within a wall, on an inside wall and/or on an outside wall of the insulating tube (2).

3. The gas insulated electric apparatus (1) of any of the previous claims, whereby the permeation barrier (5) comprises a permeation layer (6) surrounded on at least one side by a flow promoter layer (7), a surface activation and/or primer layer (8), a protective layer (9) and/or a carrier layer (14).

4. The gas insulated electric apparatus (1) of the previous claim, whereby the permeation barrier (5), the permeation layer (6), the flow promoter layer (7) and/or the surface activation and/or primer layer (8) are provided as a sheet and/or as a strip, preferably as preferably overlapping wrapped strips, preferably overlapping in axial and/or circumferential direction.

5. The gas insulated electric apparatus (1) of any of the previous claims, comprising the flow promoter layer (7), whereby the flow promoter layer (7) comprises a fleece and/or mesh.

6. The gas insulated electric apparatus (1) of any of the previous claims, whereby the permeation barrier (5) is arranged within the insulating tube (2) adjacent to an inside of the insulating tube (2) and/or closer to the inside than to the outside of the insulating tube (2).

7. The gas insulated electric apparatus (1) of any of the previous claims, comprising an outer insulating tube (11), whereby the electric high voltage appliance (3) is arranged inside the outer insulating tube (11).

8. The gas insulated electric apparatus (1) of any of the previous claims, comprising a plurality of permeation barriers (5) arranged in particular distant to each other on and/or within the insulating tube (2).

9. The gas insulated electric apparatus (1) of any of the previous claims, whereby the permeation barrier (5) comprises polyvinyl alcohol and/or ethylene vinyl alcohol and a thickness ≥ 5 and ≤ 450 µm, in particular ≥ 10 and ≤ 300 µm, or the permeation barrier (5) comprises polyurethane and a thickness ≥ 5 and ≤ 650 µm, in particular ≥ 10 and ≤ 500 µm

10. The gas insulated electric apparatus (1) of any of the previous claims, whereby the permeation barrier (5) comprises polyvinyl alcohol, ethylene vinyl alcohol and/or polyurethane and/or is covered by a protective layer (9), in particular a solvent based epoxy paint layer, having a dry film thickness ≥ 25 and ≤ 300 µm, in particular ≥ 50 and ≤ 150 µm.

11. The gas insulated electric apparatus (1) according to any of the previous claims, wherein the electric high voltage appliance (3) is provided as a high voltage interrupter, whereby the electric apparatus (1) is provided as a gas insulated live tank circuit breaker, as a gas insulated dead tank circuit breaker, as a bushing or as a gas insulated switchgear, and/or whereby the electric apparatus (1) is provided as an outdoor gas insulated electric apparatus.

12. Method for manufacturing a gas insulated electric apparatus (1) comprising an electric high voltage appliance (3), comprising the steps of:
Manufacturing an insulating tube (2), and
Applying, during manufacturing, a permeation barrier (5) to the insulating tube (2), whereby
the permeation barrier (5) comprises polyvinyl alcohol, ethylene vinyl alcohol, aluminium oxide, silicone oxide and/or polyurethane.

13. Method according to the previous method claim, whereby the insulating tube (2) comprises an epoxy based composite isolator (13), the epoxy based composite isolator (13) comprises wet wound fibres and/or the manufacturing comprises vacuum impregnating the epoxy based composite isolator (13).

14. Method comprising to any of the previous method claims, comprising the step of:
Applying, during manufacturing, first a flow promoter layer (7) and/or a surface activation and/or a primer layer (8), second the permeation barrier (5) and/or a permeation layer (6), and/or third another promoter layer (7) and/or another surface activation and/or primer layer (8).

15. Method comprising to any of the previous method claims, comprising the steps of:
Surrounding the insulating tube (2) with an insulation gas (4) comprising at least 70 % by volume of CO₂ and/or N₂ and comprising an elevated and pre-determined operating gas pressure level, and preferably
hermetically sealing the insulating tube (2).
